(19) **Europäisches Patentamt / European Patent Office / Office européen des brevets**

(11) **EP 4 297 223 A1**

(12) # EUROPEAN PATENT APPLICATION

(43) Date of publication:
**27.12.2023  Bulletin 2023/52**

(21) Application number: **22382587.8**

(22) Date of filing: **20.06.2022**

(51) International Patent Classification (IPC):
**H02J 3/00** $^{(2006.01)}$      **H02P 9/10** $^{(2006.01)}$

(52) Cooperative Patent Classification (CPC):
**H02J 3/001; H02P 9/10;** H02J 2300/28

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Gamesa Renewable Energy Innovation & Technology S.L.**
**31621 Sarriguren (Navarra) (ES)**

(72) Inventors:
- **Calvente Cordon, Pablo**
  **11360 San Roque (ES)**
- **Gomez Herrera, Damián José**
  **33195 San Esteban de las Cruces (Oviedo) (ES)**
- **Rebollo López, Emilio David**
  **28029 Madrid (ES)**

(74) Representative: **SGRE-Association**
**Siemens Gamesa Renewable Energy GmbH & Co KG**
**Schlierseestraße 28**
**81539 München (DE)**

(54) **CONTROLLING A WIND TURBINE DURING LOW VOLTAGE EVENTS**

(57)    It is described a method of controlling an asynchronous generator system (3), in particular of a wind turbine (1), connected to a utility grid (47), the method comprising setting a rotational speed reference (n) of the asynchronous generator system (3) in dependence of a utility grid voltage (Ug).

**Description**

Field of invention

The present invention relates to a method and to a controller for controlling a double fed induction generator system, in particular of a wind turbine, which is connected to a utility grid. Furthermore, the present invention is related to a wind turbine comprising the controller.

Art Background

Plural wind turbines or wind parks and plural other electricity production facilities supply electric power to a utility grid. Plural consumers receive electrical power from the utility grid. The utility grid may be designed to operate at a particular nominal voltage and/or particular nominal frequency. Depending on balance of supply and withdrawal of active/reactive power from the utility grid, grid stability may be impaired, in that the nominal grid values are not met.

Given the high introduction of wind power into the electrical systems, worldwide grid operators are developing hard normative trying to secure the grid stability.

One of the key requirements that are being specified in the Grid Connection normative all around the world is related to the grid voltage range of operation of wind turbines, fixing the necessity of remaining connected to the grid when voltage excursions up to $\pm$10-12% (from a nominal voltage value) occur, as well as other power control demands during those events.

Undervoltage (grid voltage below the nominal grid voltage) causes higher currents on stator windings of induction generators, increasing the losses and in consequence the component temperature, and causing the necessity of over-specifying the electrical generator for supporting such events, as conventionally the wind turbine control maintains the Reference Speed indeed during those events.

Conventionally, wind turbine components may have been over-dimensioned in order to be capable to operate at currents higher than nominal currents. Therefore, conventionally, components may have been over-specified for being capable of fulfilling the higher current requirements which are observed in undervoltage events. Thereby, conventionally, costs have increased.

Other conventional approaches for addressing the above-mentioned problems may assume a risk of overheating; the impact on the wind turbine availability or damage in components in case of those extreme scenarios are maintained on large periods of time in a conventional approach.

Thus, there may be a need for a method and for a controller controlling a double fed induction generator (DFIG) system or induction generator system connected to a utility grid, wherein over-dimensioning of components may be mitigated or even avoided and wherein component load is mitigated and secure and reliable operation is provided, in particular in undervoltage events.

Further, there may be a need for a method and a controller where overcost of components to over-specification, mainly regarding the induction generator, may be avoided. Furthermore, wind turbine power derating due to overheating of components during voltage excursions maintained in time may be addressed.

Summary of the Invention

This need may be met by the subject matter according to the independent claims. Advantageous embodiments of the present invention are described by the dependent claims.

According to an embodiment of the present invention it is provided a method of controlling a double fed induction generator (DFIG) system (an induction generator system), in particular of a wind turbine, connected to a utility grid, the method comprising: setting a rotational speed reference of the asynchronous generator system in dependence of a utility grid voltage.

The method may for example be performed by a controller of the induction generator which may for example be a portion of a wind turbine controller. The method may be implemented in software and/or hardware.

An induction generator is used as synonym of an asynchronous generator.

An induction generator is an asynchronous generator which generates alternating current when its rotor shaft is rotating relative to stator windings. The rotor needs to rotate faster than the synchronous speed in order to output rotor power having the desired frequency. The so called synchronous speed corresponds to the frequency of the AC power to be provided to the utility grid. In order to operate the induction generator, excitation signals or excitation power (also referred to as control signals) needs to be supplied to the rotor winding. The relative difference between synchronous speed and the operating speed is called the slip usually expressed as percent of the synchronous speed. When used in a wind turbine for example a secondary shaft of the wind turbine, coupled via a gear box to a main shaft of the turbine at which plural rotor blades are connected, drives the rotor of the induction generator to be spinning higher than the synchronous speed. Power is generated in the stator windings as well as in the rotor windings.

The induction generator may be implemented in different manner. One example of an induction generator (or asynchronous generator) is a doubly-fed electric machine. The doubly-fed electrical machine has two sets of windings (for example three-phase-windings), one stationary (i.e. the stator windings) and one rotating (i.e. the rotor winding). The stator windings may be directly connected to the output terminal of the generator. The rotor windings (which are traditionally also called the field windings) may be connected to a converter providing an AC-power at a variable frequency which may be adjusted as required.

The converter may be connected between the rotor windings and the output of the stator windings to convert AC to DC and DC to AC. The converter may be bidirectional and thereby may be enabled to pass power in both directions. Thus, the converter may be utilized to actually supply the control signal (or excitation signal) to the rotor winding but at the same time or simultaneously, also receive the rotor power from the rotor winding, convert it to the desired grid frequency and output this rotor power to the utility grid. Since the output of the converter may be connected to the output of the stator windings, also, additionally to the rotor power, the stator power as output by the stator winding may be supplied to the utility grid.

The doubly-fed induction generator may comprise a multi-phase wound rotor and a multi-phase slip ring assembly with brushes for access to the rotor windings. According to embodiments, it is possible to avoid the multi-phase slip ring assembly, but there may be problems with efficiency, cost and size. According to other embodiments, a brushless wound rotor doubly-fed electrical machine may be utilized as the induction generator. Thereby, the stator windings may be connected to the utility grid and the rotor windings may be connected to a converter via slip ring and back-to-back voltage source converter which may control both, the rotor and the grid currents. Thereby, it may be enabled to freely set the rotor frequency to be the rotor winding reference frequency which changes with the actual grid frequency. Furthermore, by using the converter to control the rotor current, it is possible to adjust the active and the reactive power fed to the utility grid from the stator independently of the generator's rotational speed. The control principle applied may for example involve two axis vector control or direct torque control.

Another example of an induction generator (or asynchronous generator) is a squirrel cage generator.

The utility grid voltage may for example be obtained from measurement equipment which for example is capable of measuring the voltage at a point of common coupling to which plural wind turbines are connected. Conventionally, the voltage is measured at stator terminals. The measurement equipment may be configured to measure the grid voltage for example at a low voltage side or high voltage side of a park transformer which may be connected between the point of common coupling and the utility grid. The utility grid voltage may for example be received at a wind park or wind park pilot and may be communicated to the individual wind turbines.

The rotational speed reference may be or may comprise a desired rotational speed with which the rotor of the asynchronous generator system is intended to rotate. Setting the rotational speed reference may be performed in different manners depending on the particular configuration and application and/or external conditions. The rotational speed reference is set in dependence of the utility grid voltage in the sense that the rotational speed reference may be changed when the utility grid voltage changes. The change of the rotational speed reference may e.g. be only performed, if for example the utility grid voltage deviates more than a threshold from a nominal grid voltage and/or when the deviation is longer than a predetermined time interval.

For setting the rotational speed reference, one or more components of the generator system or for example a driving system may be controlled. If the asynchronous generator system is for example a generator system of a wind turbine, the rotor blade pitch angle may be set based on the rotational speed reference such as to either accelerate or decelerate the rotor due to wind impacting on the rotor blades. Alternatively and/or additionally, based on a rotational speed reference, a counter-torque of the asynchronous generator system may be set or defined which then alternatively or additionally causes to decelerate or accelerate the rotor. Additionally or alternatively, also airflow affecting devices which may be optionally installed at the rotor blades may be controlled depending on the rotational speed reference.

According to an embodiment of the present invention, the rotational speed reference is set as a function of the grid voltage deviation (undervoltage situation), i.e. a deviation of the actual grid voltage from a nominal grid voltage. The rotational speed reference may also be referred to as the generator speed reference.

The method may be applicable in any steady state situation in which a grid undervoltage leads the stator current to reach a value over the rated one (P, Qmax, Vn).

Conventionally, the asynchronous generator may be oversized to work permanently in the worst undervoltage scenario which may include a scenario of a utility grid voltage being by 5% or even by up to 10% below the nominal grid voltage. In this situation, conventionally the stator current of the asynchronous generator system (DFIG) may be above the respective rated values (i.e. the currents at the rated or nominal utility grid voltage). The higher currents may conventionally cause higher copper losses and consequently higher winding temperatures.

According to an embodiment of the present invention, the rotor current and/or stator current are substantially kept at their rated values or nominal values (those which are adopted at the rated or nominal grid voltage) in the case where the utility grid voltage drops (in particular by at least a threshold) under the rated voltage value.

Advantages of the present embodiments may include that the size of the generator system or components of the generator system may be reduced or the cooling system may be designed for a lower capacity (including for example self-ventilation). Thereby, the cost and/or efficiency of the system may be improved.

According to an embodiment of the present invention, the method is performed in an undervoltage situation, where the utility grid voltage decreases below or is below a nominal grid voltage, in particular below by between 0,1% and 10% of a nominal grid voltage. Conventionally, in the case of such an undervoltage situation, the rotational speed of the system may have been kept substantially constant, for example at the nominal rotational speed. According to an embodiment of the present invention, however, the rotational speed reference is increased in an undervoltage situation compared to a situation where the utility grid adopts a nominal utility grid voltage.

The undervoltage situation may for example be characterised in that the actual grid voltage is up to 5% or up to even 10% below the nominal utility grid voltage.

According to an embodiment of the present invention, setting the rotational speed reference comprises increasing the rotational speed reference, if the utility grid voltage decreases, in particular by at least a threshold over at least a minimum time interval. Increasing the rotational speed reference may result in operating the generator system at an increased actual rotational speed. Thereby, rotor current and/or stator current of the generator system may substantially not increase or may even be kept substantially constant. Thereby, load of the components, in particular copper losses or overheating, may be reduced or even avoided.

According to an embodiment of the present invention, the rotational speed reference is set in dependence of a ratio between the nominal utility grid voltage and the (actual) utility grid voltage.

When the rotational speed reference is set in dependence of a ratio by which the utility grid voltage decreases below the nominal voltage, the rotational speed reference may be set in proportion to the nominal grid voltage divided by the actual (i.e. decreased) utility grid voltage. Thereby, effectively, excessively increasing or increasing at all the rotor current and/or stator current of the generator system may be avoided.

According to an embodiment of the present invention, the rotational speed reference is set such that a stator current and/or a rotor current of the asynchronous generator system (DFIG) is maintained substantially constant upon change, in particular decrease, of the utility grid voltage.

When the stator current and/or the rotor current is maintained substantially constant, it may mean to keep the stator current and/or rotor current within limits which may for example be up to 1 to 5% above or below the nominal respective currents. The limits may be set according to the particular requirements and may for example be set to be at 0.5% or at 1% of the respective nominal currents. Thereby, the wind turbine component or the generator system components may be reliably operated avoiding the risk of overheating or excessive copper losses for example.

According to an embodiment of the present invention, the rotational speed reference is set such that a product of the (actual) utility grid voltage and the rotational speed reference is maintained (in particular to be equal to the product of the nominal utility grid voltage and the nominal rotational speed) substantially constant upon change, in particular decrease, of the utility grid voltage.

When the product of the utility grid voltage and the rotational speed reference is maintained substantially constant upon change of the utility grid voltage, it may mean that this product stays within limits of up to 0.5% or 1% or 2% or 3% above or below the product of the nominal utility grid voltage and the nominal rotational speed reference.

Embodiments of the present invention may involve to change the rotational speed reference to be different than a nominal rotational speed reference. A nominal rotational speed reference may be set for the generator system, in order to for example optimize efficiency or performance. The nominal rotational speed reference may also be set for example additionally or alternatively in dependence of the mechanical system and/or drive system and/or dimension of for example wind turbine components.

According to an embodiment of the present invention, the method further comprises measuring the utility grid voltage, in particular at a point of common coupling to which plural wind turbines are connected. The utility grid voltage may for example be measured and/or derived from a measurement location at a high voltage side of a wind turbine transformer (which may couple the generator output terminals to a point of common coupling) or may be measured at a low voltage side or a high voltage side of a wind park transformer which may connect the point of common coupling to the utility grid. The utility grid voltage may in other embodiments be measured at plural locations.

The utility grid voltage may for example be available for or at a wind park controller or wind park pilot and may for example be communicated to the individual wind turbines. The utility grid voltage may be received for example at a wind turbine controller (for example comprising a controller for controlling an asynchronous generator system according to an embodiment of the present invention, as described below). In other embodiments, the utility grid voltage may be estimated or derived from electrical or mechanical quantities different from the grid voltage itself.

According to an embodiment of the present invention, the method further comprises at least one of: low pass filtering the measured grid voltage; averaging the measured grid voltage over a moving time window, the time window in particular having a width of between 1 min and 20 minutes, further in particular between 3 min and 10 minutes.

One or more of the above-mentioned method steps may assure that the rotational speed reference does not change too rapidly. In particular, the rotational speed reference may be set based on the low pass filtered grid voltage and/or based on the averaged measured grid voltage. Thereby, it may be avoided to too rapidly change the rotational speed reference and thus also the actual rotational speed of the generator system.

According to an embodiment of the present invention, the method further comprises controlling the generator system according to the rotational speed reference. In particular, the generator system may be controlled regarding its reference torque and/or reference active power and/or reference reactive power. Thereby, in particular, a generator or a converter which may be included in the generator system may be controlled.

It should however be understood that additionally or alternatively other components of for example a wind turbine may be controlled, for example a driving system including the rotor blades.

The generator system and/or a driving system may be controlled according to the rotational speed reference (which is set in dependence of the utility grid voltage).

According to an embodiment of the present invention, the asynchronous generator system is driven by a rotor of a wind turbine at which plural rotor blades are mounted, the wind turbine comprising a blade pitch adjustment system for adapting at least one blade pitch angle, wherein controlling the generator according to the rotational speed reference comprises: determining, based on the rotational speed reference, a blade pitch adjustment system reference, in particular comprising at least one of: blade pitch angle reference and/or a mechanical power reference and/or a mechanical torque reference; supplying the blade pitch adjustment system reference to the blade pitch adjustment system.

The blade pitch adjustment system is capable to set the blade pitch angles of the blades of the wind turbine. Setting the blade pitch angle may involve to rotate the respective blade about a longitudinal axis of the rotor blade. Adapting the blade pitch angle may change the lifting force of the air flow across the surface of the rotor blade. Thereby, the driving torque may be changed. For, for example, increasing the rotational speed (when the rotational speed reference is for example above the nominal rotational speed reference), the lift of the rotor blade may be increased due to a changed blade pitch angle, such that the driving torque is increased resulting in higher actual rotational speed.

The control signal which is supplied to the blade pitch adjustment system may be selected from a number of different signal types which may be selected based on the particular application. One simple choice may be to supply a blade pitch angle reference to the blade pitch adjustment system. The respective blade pitch angle reference may be derived or calculated from the rotational speed reference. In other embodiments, a blade pitch angle reference may directly be calculated from the utility grid voltage.

The blade pitch adjustment system may then set the respective blade pitch angle(s) according to the blade pitch adjustment system reference.

According to an embodiment of the present invention, the asynchronous generator system comprises an asynchronous generator having multiple phase stator windings and having multiple phase rotor windings; a converter connected to the rotor windings and configured to convert a variable frequency rotor power stream to fixed frequency rotor power stream at converter output terminals connected to the utility grid; the stator windings being connected to the utility grid, wherein controlling the generator according to the rotational speed reference comprises: determining, based on the rotational speed reference, a converter reference, in particular comprising at least one of: a converter power reference; a converter torque reference supplying the converter reference to the converter.

The term "asynchronous generator" is used as a synonym of the term "induction generator" in the present application.

The converter may comprise an AC-DC portion, a DC link and a DC-AC portion. The AC-DC portion as well as the DC-AC portion may comprise plural controllable switches, such as IGBTs, which are controlled by supplying respective gate driver signals to gates of the controllable switches.

The converter reference may be supplied to the converter for controlling the converter. Depending on the particular application, the converter reference may be provided as e.g. a converter power reference, indicating the desired power the converter should output or the converter reference can be provided as a converter torque reference, indicating a desired torque the converter should cause or defining a counter-torque the generator should exert on the rotating rotor.

By determining and supplying a converter reference, the entire generator system may be controlled regarding a counter-torque counteracting the rotating rotor. Thereby, the rotational speed of the rotor may be controlled, in order to substantially amount to the rotational speed reference as determined based on the utility grid voltage.

It should be understood, that features, individually or in any combination, described, explained, provided or applied to a method of controlling an asynchronous generator system, may also, individually or in any combination, applied for or provided for a controller for controlling an asynchronous generator system (DFIG) according to embodiments of the present invention and vice versa.

According to an embodiment of the present invention it is provided a controller for controlling an asynchronous generator system, in particular of a wind turbine, connected to a utility grid, the controller being configured to set a rotational speed reference of the asynchronous generator system in dependence of a utility grid voltage, the controller being in particular configured to control or carry out a method according to one of the preceding embodiments.

The controller may for example be part of a wind turbine controller. The controller may be implemented in software and/or hardware.

According to an embodiment of the present invention it is provided a wind turbine, comprising: an asynchronous generator system (DFIG); and a controller according to the preceding embodiment.

The wind turbine may comprise a rotor at which plural rotor blades are connected. The rotor may be configured to rotate relative to a stator of the asynchronous generator. The rotor windings may be mounted at the rotor.

Embodiments of the present invention may in particular support a multi-phase asynchronous generator, in particular three-phase asynchronous generator.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Embodiments of the present invention are now described with reference to the accompanying drawings. The invention is not restricted to the illustrated or described embodiments.

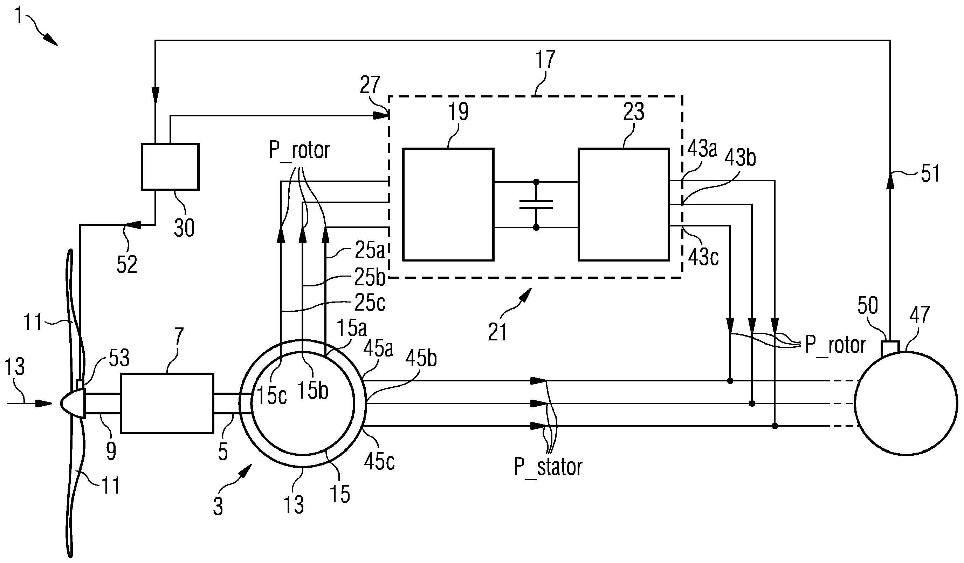

The Figure schematically illustrates a wind turbine according to an embodiment of the present invention.

Detailed Description

The wind turbine 1 according to an embodiment of the present invention schematically illustrated in the Figure includes a doubly-fed induction generator 3 (corresponding to an implementation of an asynchronous generator). The induction generator 3 is driven by a secondary shaft 5 which is coupled to a (optional) gear box 7. The gear box 7 converts a relatively low rotational speed of a main shaft 9 of the wind turbine to a relatively high rotational speed of the secondary shaft 5. At the main shaft 9 plural rotor blades 11 are connected, which are driven by impacting wind 13. A not illustrated nacelle mounted on top of a wind turbine power harbours the generator 3, the shafts 9, 5, the gear box 7 and a converter 17.

The generator 3 comprises stator windings 13 as well as rotor windings 15 both of which are only schematically illustrated. The stator windings 13 may for example comprise three-phase windings or coils which are wound around teeth of a ferromagnetic stator yaw. The rotor windings 15 may also comprise for example three-phase rotor windings wound around ferromagnetic cores.

The three-phase rotor windings 15a, 15b, 15c are connected to a converter 17 comprising an AC-DC converter portion 19, a DC link 21 and a DC-AC converter portion 23. The converter 17 converts AC power into AC power of different frequencies in both directions. The converter 17 receives (for example three-phase) rotor power 25a, 25b, 25c (P_rotor) from the rotor windings 15.

The controller 30 is provided for controlling the induction generator 3 connected to a utility grid 47 according to an embodiment of the present invention.

The induction generator 3 can e.g. controlled via the converter 17. For controlling the converter 17, the converter 17 receives a converter reference 27 from the controller 30 which, beside the converter 17, may also control other portions of the wind turbine.

The output terminals 43a, 43b, 43c of the converter 17 are connected with output terminals 45a, 45b, 45c of the stator windings 13. The stator power P_stator as well as the rotor power P_rotor are received by a (not illustrated) step-up transformer and this is connected to the utility grid 47 where other wind turbines are also connected.

The utility grid 47 is intended to be operated at a nominal frequency and voltage. However, due to disturbances or imbalances between power production and power consumption, the voltage of the utility grid may occasionally deviate from the nominal voltage.

Conventionally, the rotor winding reference frequency may not have been set in dependence of the grid voltage U_grid.

The controller 30 for controlling an asynchronous generator system 3 according to an embodiment of the present invention is configured to set a rotational speed reference n of the asynchronous generator system 3 in dependence of a utility grid voltage $U_g$.

Thereby, the utility grid voltage $U_g$ is measured by for example measurement equipment 50 which sends the utility grid voltage of the utility grid 47. A respective voltage measurement signal 51 is received by the controller 30. The controller 30 then determines the rotational speed reference n based on the utility grid voltage $U_g$.

The rotational speed reference may be an internal variable or quantity internally used within the controller 30. Occasionally, the rotational speed reference itself may be utilized for controlling one or more components of the wind turbine.

According to particular embodiments, the controller determines, based on the rotational speed reference or generally based on the utility grid voltage, a converter reference 27 and/or a blade pitch adjustment system reference 52 which is supplied to a blade pitch adjustment system 53. The blade pitch adjustment system 53 is configured to set a blade pitch angle of at least one rotor blade 11 which is mounted at the primary rotor 9 of the wind turbine 1 illustrated in the figure. The control signal 52 supplied from the controller to the rotor blade adjustment system 53 may for example be a blade pitch angle reference.

According to embodiments of the present invention, the stator current and/or the rotor current are kept substantially at the rated value when the utility grid voltage drops below the rated utility grid voltage or the nominal utility grid voltage.

In the following equations for explaining how to determine a rotational speed reference, $P_s$ stands for the stator power, $P_T$ stands for the total power (i.e. the sum of the stator power and the rotor power), n stands for the rotational speed reference and $n_s$ stands for the synchronous speed which is proportional to the grid frequency. $U_g$ stands for the actual grid voltage being also equal to the stator voltage $U_s$.

$$P_s = P_T \frac{n_s}{n}$$

$$P_s = \sqrt{3} U_g I_s \cos \varphi$$

$$I_s = \frac{P_T n_s}{\sqrt{3}\, n\, U_g \cos \varphi}$$

At nominal or rated power $P_n$, reactive power $Q_n$ and nominal frequency $f_n$, but at an undervoltage scenario, if the stator current $I_s$ is intended to maintain constant, the following equations apply:

$$n\, U_g = cte = n_n U_n$$

For example, if $U_g = 0.95 \cdot U_n$:

$$n\, 0.95 U_n = n_n U_n$$

$$n = \frac{n_n}{0.95} \approx 1.05 n_n$$

Thus, the stator current will stay at the rated or nominal value, if the rotational speed increases approximately by 5% when the stator voltage (utility grid voltage) reduces by 5%. In the following equations, $P_r$ stands for rotor power, $I_r$ stands for the rotor current, $I_s$ stands for the stator current, $f_g$ stands for the actual grid frequency, rt stands for rotor-stator turn ratio.

$$P_r = P_T \left(1 - \frac{n_s}{n}\right)$$

$$P_r = \sqrt{3} U_r I_r \cos \varphi = \sqrt{3} s\, rt\, U_g I_r \cos \varphi$$

$$I_r = \frac{P_T\left(1 - \frac{n_s}{n}\right)}{\sqrt{3}\left(\frac{n}{n_s} - 1\right) rt\, U_g \cos\varphi} = \frac{60 P_T f_g}{3\sqrt{3}\, rt\, U_g \cos\varphi\, n}$$

At the rated active power, reactive power and utility grid frequency, but at an undervoltage scenario, if it is intended to keep the rotor current $I_r$ substantially constant, the following equation applies:

$$n\, U_g = cte = n_n U_n$$

For example, if $U_g = 0.95\, U_n$ the following equations apply:

$$n\, 0.95 U_n = n_n U_n$$

$$n = \frac{n_n}{0.95} \approx 1.05 n_n$$

In order to reduce loads and mechanical elements, given the high thermal inertia of the system, it is valid that the application of a e.g. 1 min, 3 min or 10 min moving average filtering to the utility grid voltage is applied, if necessary.

As can be seen from the equations relating for keeping constant the stator current and keeping constant the rotor current, the same relationship how to set the rotational speed reference is obtained. Thus, the rotational speed reference is increased if the utility grid voltage decreases.

Further, the rotational speed reference is set in dependence of a ratio $U_n/U_g$ by which the utility grid voltage decreases below the nominal grid voltage. The rotational speed reference is set in dependence of a ratio between the nominal voltage and the actual utility grid voltage.

When the rotational speed reference is set according to the above equations, the stator current and/or the rotor current of the asynchronous generator system 3 is maintained substantially constant upon change of the utility grid voltage $U_g$.

To obtain the voltage measurement signal 51, the voltage measurement signals may be low pass filtered or averaged over a moving time window.

The wind turbine 1 illustrates the controller 30 controlling the generator system 3 via the converter 17 and additionally or alternatively controlling the blade pitch adjustment system 53.

According to embodiments of the present invention, exclusively the blade pitch adjustment system 53 may be controlled by the controller 30 via the blade pitch adjustment system reference 52 without additionally controlling the generator system 3 or controlling the converter 17. In still other embodiments, the converter 17 is only controlled by the controller 30 without also controlling the blade pitch adjustment system 53.

Conventionally, the undervoltage condition is considered as a requirement the generator system has to comply with, since no control strategy is conventionally applied.

Embodiments of the present invention may provide the following advantages:

- cost optimization
- avoidance of over-specification of systems and electrical components
- secure/increase grid connection capabilities of wind turbines
- avoiding possible reduction of wind turbine availability
- increasing product competitiveness.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. Method of controlling an asynchronous generator system (3), in particular of a wind turbine (1), connected to a utility grid (47), the method comprising:
   setting a rotational speed reference (n) of the asynchronous generator system (3) in dependence of a utility grid voltage (Ug).

2. Method according to the preceding claim, performed in an undervoltage situation, where the utility grid voltage (Ug) decreases below or is below a nominal grid voltage (Un), in particular below by between 0,1 % and 10% of a nominal grid voltage (Un).

3. Method according to one of the preceding claims,
   wherein setting the rotational speed reference (n) comprises:
   increasing the rotational speed reference (n), if the utility grid voltage (Ug) decreases, in particular by at least a threshold over at least a minimum time interval.

4. Method according to one of the preceding claims,
   wherein the rotational speed reference (n) is set in dependence of a ratio between the nominal grid voltage (Un) and the utility grid voltage (Ug).

5. Method according to one of the preceding claims,
   wherein the rotational speed reference (n) is set such that a stator current (Is) and/or a rotor current (Ir) of the asynchronous generator system is maintained substantially constant upon change, in particular decrease, of the utility grid voltage.

6. Method according to one of the preceding claims,
   wherein the rotational speed reference (n) is set such that a product of the utility grid voltage (Ug) and the rotational speed reference (n) is maintained substantially constant upon change, in particular decrease, of the utility grid voltage.

7. Method according to one of the preceding claims,
   the method further comprising:
   measuring the utility grid voltage (Ug), in particular at a point of common coupling to which plural wind turbines are connected or directly at the generator terminals.

8. Method according to the preceding claim,

   the method further comprising at least one of:

   low pass filtering the measured grid voltage;
   averaging the measured grid voltage over a moving time window, the time window in particular

   having a width of between 1 min and 20 minutes, further in particular between 3 min and 10 minutes.

9. Method according to one of the preceding claims, further comprising:
   controlling the generator system (3) according to the rotational speed reference.

10. Method according to the preceding claim,
    wherein the asynchronous generator system (3) is driven by a rotor (9, 5) of a wind turbine (1) at which plural rotor blades (11) are mounted, the wind turbine comprising a blade pitch adjustment system (53) for adapting at least one blade pitch angle,
    wherein controlling the generator (3) according to the rotational speed reference comprises:

    determining, based on the rotational speed reference (n), a blade pitch adjustment system reference (52), in particular comprising at least one of:

    blade pitch angle reference and/or
    a mechanical power reference and/or
    a mechanical torque reference;

supplying the blade pitch adjustment system reference (52) to the blade pitch adjustment system (53).

11. Method according to one of the two preceding claims, the asynchronous generator system (3) comprising:

an asynchronous generator (13, 15) having multiple phase stator windings and having multiple phase rotor windings;
a converter (17) connected to the rotor windings and configured to convert a variable frequency rotor power stream to fixed frequency rotor power stream at converter output terminals connected to the utility grid;
the stator windings being connected to the utility grid (47),

wherein controlling the generator according to the rotational speed reference comprises:

determining, based on the rotational speed reference, a converter reference (27), in particular comprising at least one of:

a converter power reference;
a converter torque reference.

supplying the converter reference to the converter.

12. Method according to the preceding claim,
wherein the asynchronous generator comprises at least one of:
a doubly fed induction generator (13, 15).

13. Controller (30) for controlling an asynchronous generator system (3), in particular of a wind turbine, connected to a utility grid (47), the controller being configured:
to set a rotational speed reference (n) of the asynchronous generator system in dependence of a utility grid voltage (Ug),
the controller being in particular configured to control or carry out a method according to one of the preceding claims.

14. Wind turbine (1), comprising:

an asynchronous generator system (3); and
a controller (30) according to the preceding claim.

Europäisches
Patentamt

European
Patent Office

Office européen
des brevets

# EUROPEAN SEARCH REPORT

Application Number

EP 22 38 2587

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/214927 A1 (LETAS HEINZ-HERMANN [DE]) 11 July 2019 (2019-07-11) * paragraphs [0039], [0002], [0073], [0075], [0050]; claims 1-15; figures 1,3,5,7 * | 1-14 | INV. H02J3/00 H02P9/10 |

TECHNICAL FIELDS
SEARCHED        (IPC)

H02J
H02P

The present search report has been drawn up for all claims

| Place of search | Date of completion of the search | Examiner |
|---|---|---|
| Munich | 23 January 2023 | Bourdon, Jérémy |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
..........................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 38 2587

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2023

| Patent document cited in search report | Publication date | Patent family member(s) | Publication date |
|---|---|---|---|
| US 2019214927 A1 | 11-07-2019 | CN 110034577 A | 19-07-2019 |
| | | DE 102018000157 A1 | 11-07-2019 |
| | | EP 3512064 A1 | 17-07-2019 |
| | | ES 2923144 T3 | 23-09-2022 |
| | | US 2019214927 A1 | 11-07-2019 |

EPO FORM P0459

For more details about this annex : see Official Journal of the European Patent Office, No. 12/82